(19) Europäisches Patentamt

European Patent Office

Office européen des brevets

(11) **EP 3 115 749 A1**

(12) **EUROPEAN PATENT APPLICATION**

(43) Date of publication:
**11.01.2017 Bulletin 2017/02**

(51) Int Cl.:
***G01C 21/36*** *(2006.01)*

(21) Application number: **16001517.8**

(22) Date of filing: **07.07.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **08.07.2015   JP 2015137314**

(71) Applicant: **Clarion Co., Ltd.**
**Saitama 330-0081 (JP)**

(72) Inventors:
• **Matsumoto, Yusuke**
 **Saitama-shi, Saitama, 330-0081 (JP)**
• **Abe, Noriyuki**
 **Saitama-shi, Saitama, 330-0081 (JP)**
• **Okamoto, Kimio**
 **Saitama-shi, Saitama, 330-0081 (JP)**
• **Yamada, Tetsuya**
 **Hitachi-shi, Ibaraki, 319-1221 (JP)**
• **Fujieda, Takuya**
 **Hitachi-shi, Ibaraki, 319-1221 (JP)**

(74) Representative: **Strehl Schübel-Hopf & Partner**
**Maximilianstrasse 54**
**80538 München (DE)**

(54) **IN-VEHICLE DEVICE, INFORMATION SYSTEM, AND OUTPUT CONTROL METHOD**

(57)    An in-vehicle device according to the present invention includes a storage unit that stores keyword information in which a keyword and the degree of evaluating the keyword are associated, and output determination information in which the degree of evaluating the keyword and an output method according to the degree of evaluating the keyword are associated, an information evaluation unit that evaluates the object information to be output using the keyword information, and an output control unit that outputs the object information to be output by the output method identified using the output determination information according to the degree of the evaluation performed by the information evaluation unit.

**FIG.1**

**Description**

BACKGROUND

Technical Field

The present invention relates to a technology of an in-vehicle device, an information system, and an output control method.

Related Art

Conventionally, a technology about a platform device including storage means, registration means, and control means is described in JP 2013-015968 A. The storage means stores a plurality of functions, which is used in executing an application and expresses different functions determined in advance, and the degrees of association of five senses according to the five senses on which the functions expressed by the plurality of functions acts, in association with each other. The registration means provides, when a registration request of an application that uses the function has been made, the degree of priority to the application, registration of which has been requested and registers the application, based on the degrees of association of the five senses stored in the storage means corresponding to the function used by the application, registration of which has been requested. The control means executes the application registered by the registration means and controls an execution result to be output from an output device mounted on a vehicle, and controls the execution result of the application having the high degree of priority to be output from the output device when execution results of a plurality of applications use the same output device at the same time.

SUMMARY OF THE INVENTION

In the above technology, the function used by the application is determined, and the degree of priority of the application can be calculated by reference to the degrees of association of an auditory sense, a visual sense, an olfactory sense, a gustatory sense, and a tactile sense. However, the degree of priority cannot be considered in a different point of view from these senses. For example, the degree of priority cannot be determined according to a field related to content of information, and the above technology cannot necessarily contribute to convenience of users.
An objective of the present invention is to provide a technology for appropriately performing an output according to content.
The present invention includes a plurality of means for solving at least a part of the problem. However, an example is as follows. To solve the above-problem, an in-vehicle device according to the present invention includes a storage unit that stores keyword information in which a keyword and the degree of evaluating the keyword are associated, and output determination information in which the degree of evaluating the keyword and an output method according to the degree of evaluating the keyword are associated, an information evaluation unit that evaluates an object information to be output using the keyword information, and an output control unit that outputs the object information to be output by the output method identified using the output determination information according to the degree of the evaluation performed by the information evaluation unit.
According to the invention of the present application, a technology for appropriately performing an output according to content can be provided. Problems, configurations, and effects other than the above description will be revealed by description of the following embodiments.

BRIEF DESCRIPTION OF DRAWINGS

FIG. 1 is a diagram illustrating a structure of an information system according to a first embodiment;
FIG. 2 is a diagram illustrating a structure of an in-vehicle device according to the first embodiment;
FIG. 3 is a diagram illustrating a data structure of an application information storage unit;
FIG. 4 is a diagram illustrating a data structure of a tag list storage unit;
FIG. 5 is a diagram illustrating a data structure of an output matrix storage unit;
FIG. 6 is a diagram illustrating a data structure of an output information storage unit;
FIG. 7 is a diagram illustrating a hardware configuration of a server device;
FIG. 8 is a diagram illustrating a flow of environmental construction processing;
FIG. 9 is a diagram illustrating a flow of output information receiving processing;
FIG. 10 is a diagram illustrating a flow of information output processing;

FIG. 11 is a diagram illustrating a flow of urgent information receiving processing;

FIG. 12 is a diagram illustrating a flow of interruption output processing;

FIG. 13 is a diagram illustrating a flow of tag list receiving processing; and

FIG. 14 is a diagram illustrating a structure of an information system according to a second embodiment;

DETAILED DESCRIPTION

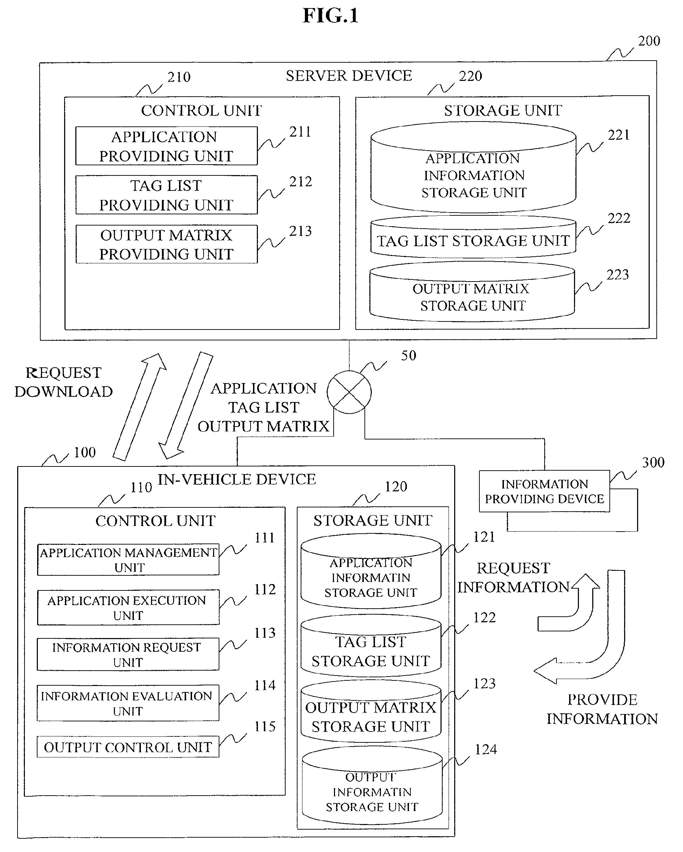

Hereinafter, an information system to which an embodiment according to the present invention is applied will be described with reference to the drawings. Note that FIGS. 1 to 14 do not illustrate all configurations of the information system, and a part of the configurations is appropriately omitted for easy understanding and description is given.

FIG. 1 illustrates a structure of the information system according to the first embodiment. In the present information system, an in-vehicle device 100, a server device 200, and one or a plurality of other information providing devices 300 are communicatively connected through a network 50. The network 50 is desirably a public wireless communication network such as the Internet or a mobile phone network, for example. However, the network 50 may be a closed communication network provided in each predetermined managed area. To be specific, the network 50 is a communication network by any of various communication methods such as wireless networks including the Internet, a local area network (LAN), a wide area network (WAN), and a Wi-Fi (registered trademark), and short-distance wireless communication such as Bluetooth (registered trademark).

The in-vehicle device 100 is an information processing device mounted in a vehicle and can perform predetermined communication with another device mounted in the vehicle. In the present embodiment, the in-vehicle device 100 is a navigation system that can acquire current position information, route information, and the like. However, the in-vehicle device 100 as an object of the invention of the present application is not limited to the in-vehicle device 100 illustrated in FIG. 1. For example, the in-vehicle device 100 may be any of various control devices incorporated in a moving body. Further, the in-vehicle device 100 may be detachably provided in the vehicle. Alternatively, the in-vehicle device 100 may be a moving terminal such as a mobile telephone device held by a driver or an occupant of the vehicle, and may be a smart phone, a feature phone, a personal digital assistance (PDA), a notebook computer, a tablet terminal, or the like.

The in-vehicle device 100 includes a control unit 110 and a storage unit 120. The control unit 110 includes an application management unit 111, an application execution unit 112, an information request unit 113, an information evaluation unit 114, and an output control unit 115.

The storage unit 120 includes an application information storage unit 121, a tag list storage unit 122, an output matrix storage unit 123, and an output information storage unit 124.

The server device 200 is an information processing device that includes a control unit 210 and a storage unit 220. The server device 200 provides, upon receipt of a download request of an application from the in-vehicle device 100 or a download request of a tag list or an output matrix, information of a type according to the request.

The storage unit 220 of the server device 200 includes an application information storage unit 221, a tag list storage unit 222, and an output matrix storage unit 223.

The control unit 210 of the server device 200 includes an application providing unit 211, a tag list providing unit 212, and an output matrix providing unit 213.

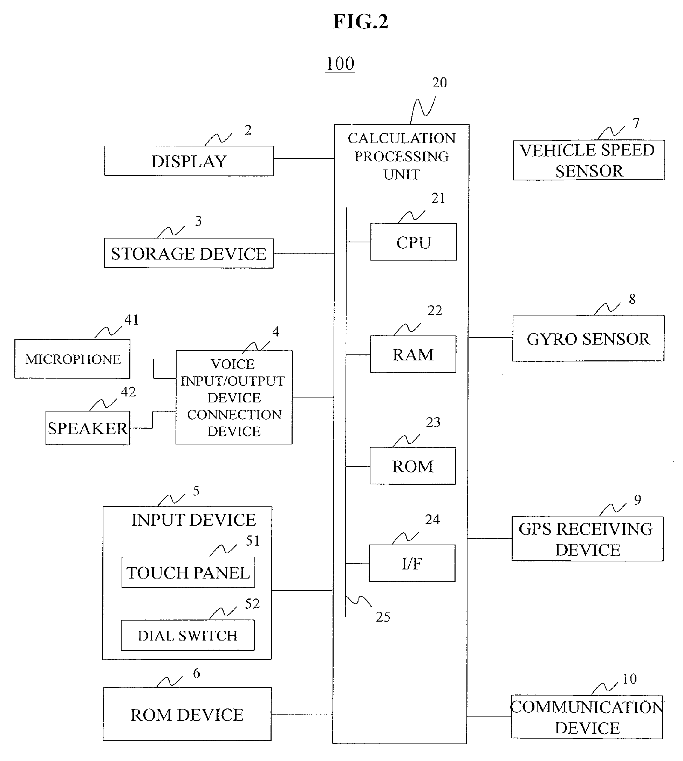

FIG. 2 is a diagram illustrating a structure of the in-vehicle device 100. The in-vehicle device 100 includes a calculation processing unit 20, a display 2, a storage device 3, a voice input/output device connection device 4 (including a microphone 41 as a voice input device and a speaker 42 as a voice output device), an input device 5 (including a touch panel 51 and a dial switch 52 as contact input devices), a read only memory (ROM) device 6, a vehicle speed sensor 7, a gyro sensor 8, a global positioning system (GPS) receiving device 9, and a communication device 10.

The calculation processing unit 20 is a central unit that performs various types of processing. For example, the calculation processing unit 20 calculates a current place based on information output from the various sensors 7 and 8, the GPS receiving device 9, the communication device 10, and the like. Further, the calculation processing unit 20 reads map data necessary for display from the storage device 3 or the ROM device 6 based on obtained information of the current place.

Further, the calculation processing unit 20 develops the read map data into graphics, superimposes a mark that indicates the current place on the map, and displays a superimposed image on the display 2. Further, the calculation processing unit 20 searches for a recommended route that is an optimum route connecting the current place or a departure point instructed by a user and a destination (or a transit point or a stop-over point) using the map data stored in the storage device 3 or the ROM device 6. Further, the calculation processing unit 20 guides the user using the speaker 42 and the display 2.

The calculation processing unit 20 of the in-vehicle device 100 has a configuration in which the devices are connected with a bus 25. The calculation processing unit 20 includes a central processing unit (CPU) 21 that executes various types of processing such as calculation of numerical values and control of the devices, a random access memory (RAM) 22 that stores the map data, the calculation data, and the like read from the storage device 3, a ROM 23 that stores programs and data, and an interface (I/F) 24 for connecting various types of hardware and the calculation processing unit 20.

The display 2 is a unit that displays graphic information generated in the calculation processing unit 20 and the like. The display 2 is configured from any of various display devices such as a liquid crystal display and an organic electro luminescence (EL) display.

The storage device 3 is configured from at least a readable/writable storage medium such as a hard disk drive (HDD), a solid state drive (SSD), or a non-volatile memory card.

In this storage medium, map information that is map data (including link data of a link that configured roads on a map) necessary for a regular route search device, an application information storage unit 121, a tag list storage unit 122, an output matrix storage unit 123, and an output information storage unit 124.

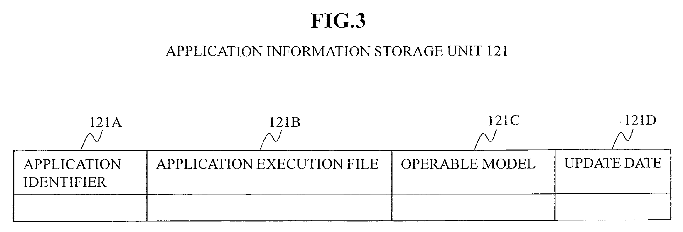

FIG. 3 is a diagram illustrating a data structure of the application information storage unit 121. In the application information storage unit 121, an application execution file 121B, an operable model 121C, and an update date 121D are associated with an application identifier 121A that identifies an application.

The application execution file 121B is information that identifies various files such as an executable file necessary for realizing a function of an application and a setting file. Note that, in the application execution file 121B, a path to a folder (directory) including an application execution file, an archive file including an application execution file, and a uniform resource identifier (URI) for using an application function from an external device may be stored.

The operable model 121C is information that identifies a model of the in-vehicle device 100 that can execute an application. For example, in the operable model 121C, one or a plurality of identifiers that identifies a product is stored. The update date 121D is information that identifies date and time when at least one of the application execution files identified by the application execution file 121B has been updated.

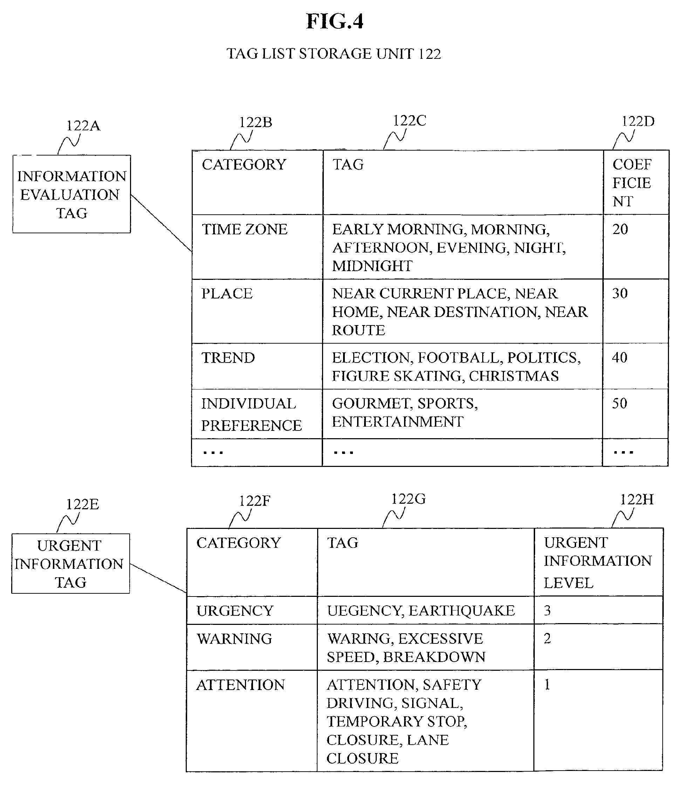

FIG. 4 is a diagram illustrating a data structure of the tag list storage unit 122. The tag list storage unit 122 includes a plurality of pieces of information in which a category 122B, a tag 122C, and a coefficient 122D are associated with one another, as a tag list related to the information evaluation tag 122A. Further, the tag list storage unit 122 includes a plurality of pieces of information in which a category 122F, a tag 122G, and an urgent information level 122H are associated with one another, as a tag list related to an urgent information tag 122E.

The information evaluation tag 122A is a unit to manage, when evaluating information according to an evaluation value, a tag for providing a relative weight of evaluation according to content included in the information, and information indicating the weight of the tag.

The category 122B is information that indicates a classification with which a tag is given meaning. The tag 122C is information that identifies specific meaning of an element included in the information with a keyword. The coefficient 122D is information that indicates the degree of evaluating the relative weight of information determined in advance to the category 122B.

The urgent information tag 122E is a unit to manage a tag using a keyword for providing the degree of evaluating a relative weight of the degree of urgency as to whether information has relatively high urgency or low urgency, regardless of the category of the information, and information that indicates the weight of the tag.

The category 122F is information that indicates a classification of the degree of urgency of a tag. The tag 122G is information that identifies a specific degree of urgency with a keyword about information. The urgent information level 122H is information that indicates the degree of evaluating the degree of urgency of information determined in advance to the category 122F. Note that a specific example will be described below.

That is, the tag list storage unit 122 can also be said to be keyword information or urgent information in which a keyword and the degree of evaluating the keyword, or a keyword and the degree of urgency regarding the keyword are associated.

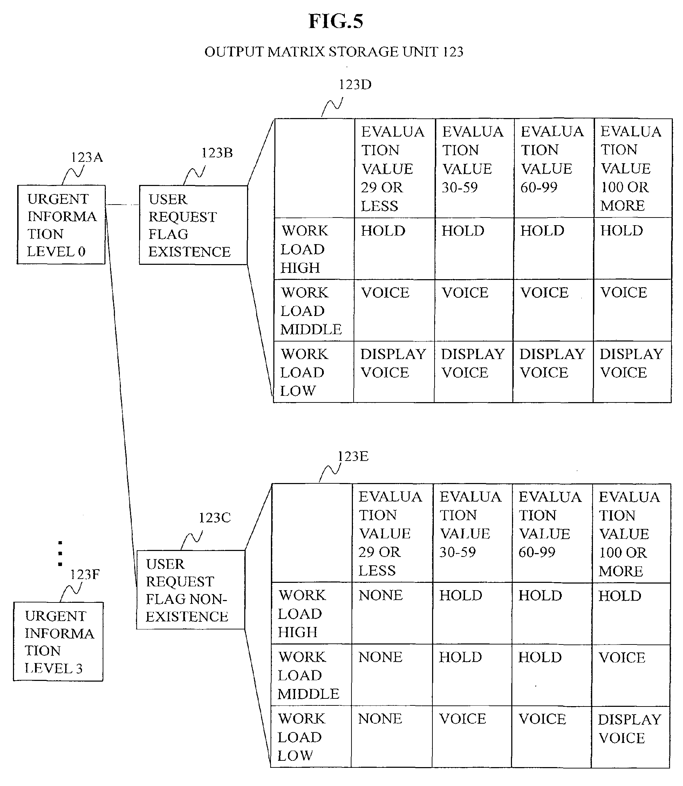

FIG. 5 is a diagram illustrating a data structure of the output matrix storage unit 123. In the output matrix storage unit 123, a matrix 123D and a matrix 123E are associated with an urgent information level "0" 123A that indicates that the urgent information level is "0" according to user request flag existence 123B and user request flag non-existence 123C. Further, similarly, matrixes are respectively stored in association with urgent information levels "1", "2", and "3", other than the urgent information level "0", according to existence and non-existence of the user request flag.

The urgent information level is an index value that indicates that information has a higher degree of urgency as the value is increased. For example, the urgent information level "0" is the degree of urgency that does not have urgency and just notifies information, and the urgent information level "3" is the degree of urgency that corresponds to "urgent situation occurs" that strongly prompts an action to cope with the situation, such as occurrence of an earthquake. The urgent information level "1" that is an intermediate value is the degree of urgency that prompts an alert of a situation before something happens, such as notifying existence of a signal in front or notifying existence of lane closure. Similarly, the urgent information level "2" is the degree of urgency that prompts coping with a situation that has occurred, such as notifying excessive speed, and notifying breakdown.

The user request flag is information that identifies whether information is the information returned as a result of information requested by the user. That is, the user request flag existence 123B indicates a state that indicates received information is the information requested by the user.

The matrixes 123D and 123E are table information for identifying an intersection of a horizontal axis that indicates high and low of the evaluation value and a vertical axis that indicates high and low of a work load, as a method of an output. Here, the evaluation value is an index value calculated by the information evaluation unit 114 using the information evaluation tag 122A, and the like, and is identified by the following formula (1):

[Mathematical Formula 1]

$$V = \sum_{i=1}^{n} a_i k_i \quad \ldots \quad \text{Formula (1)}$$

Here, V is an evaluation value, n is the number of categories, $a_i$ is the number of tags that accord with a tag of i-th category, and $k_i$ is an i-th category coefficient. Further, i is a natural number.

The work load is an index value that indicates a load state of a driver calculated in the control unit 110 of the in-vehicle device 100. For example, while the load state of the drive is estimated to be high and the work load is calculated to be high during driving at an intersection or during driving an expressway, the load state of the driver is estimated to be low and the work load is calculated to be low in a state where a vehicle is stopped during a traffic jam. As a work load calculation method, a known technology is used.

Basically, the matrix is defined in advance such that the output can be made to attract the driver's attention as information has a higher evaluation value or the work load is lower.

That is, the output matrix storage unit 123 can be said to be output determination information in which information is associated with an output method according to the degree of evaluation.

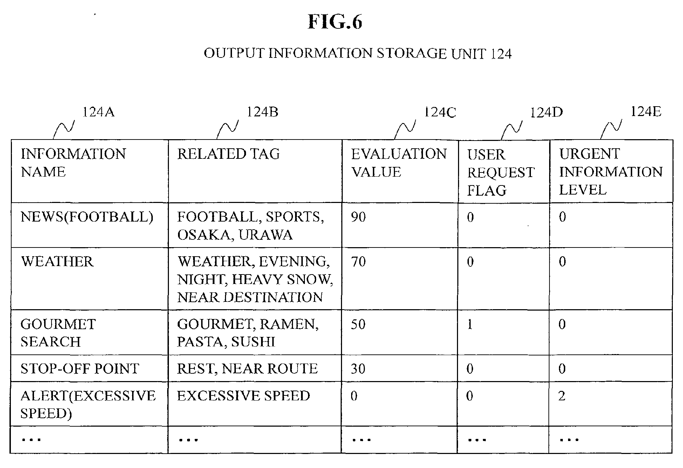

FIG. 6 is a diagram illustrating a data structure of the output information storage unit 124. The output information storage unit 124 is a storage unit that stores object information to be output to manage the information before an output. The output information storage unit 124 stores an information name 124A, a related tag 124B, an evaluation value 124C, a user request flag 124D, and an urgent information level 124E in association with one another.

The information name 124A is information that identifies a name of the object information to be output. The related tag 124B is information that identifies a tag associated with the object information to be output. The evaluation value 124C is information that identifies an evaluation value of information identified with the information name 124A. The user request flag 124D is information that identifies whether the object information to be output is the information requested by the user. The urgent information level 124E is information that identifies the urgent information level of the object information to be output.

Referring back to the description of FIG. 2. The voice input/output device connection device 4 is connected with the microphone 41 as the voice input device and the speaker 42 as the voice output device, and converts the microphone 41 and the speaker 42 usable. The microphone 41 acquires a voice outside the in-vehicle device 100 such as a voice uttered by the user or another passenger.

The speaker 42 outputs a message generated in the calculation processing unit 20 to the user as a voice. The microphone 41 and the speaker 42 are separately arranged in predetermined portions of the vehicle. However, the microphone 41 and the speaker 42 may be housed in an integral housing. The in-vehicle device 100 can include a plurality of the microphones 41 and the speakers 42.

The input device 5 is a device that receives an instruction from the user through an operation with a hand of the user. The input device 5 is configured from the touch panel 51, the dial switch 52, a scroll key that is another hard switch (not illustrated), a scale change key, and the like. Further, the input device 5 includes a remote controller that can remotely operate and instruct the in-vehicle device 100. The remote controller includes a dial switch, a scroll key, a scale change key, and the like, and can send information of the operated keys and switches to the in-vehicle device 100.

The touch panel 51 is mounted on a display surface side of the display 2, and can allow a display screen to be seen through. The touch panel 51 identifies a touched position corresponding to XY coordinates of the image displayed on the display 2, converts the touched position into coordinates, and outputs the coordinates. The touch panel 51 is configured from a pressure-sensitive or electrostatic input detecting element, or the like. Note that the touch panel 51 may realize multi-touch that can detect a plurality of touched positions at the same time.

The dial switch 52 is configured to be rotatable in a clockwise direction or an anti-clockwise direction, generates a pulse signal for each predetermined angle of rotation, and outputs the pulse signal to the calculation processing unit 20. The calculation processing unit 20 obtains a rotation angle from the number of the pulse signals.

The ROM device 6 is configured from at least a readable storage medium such as a ROM including a CD-ROM or DVD-ROM, or an integrated circuit(IC) card. In this storage medium, for example, moving image data, voice data, and the like are stored.

The vehicle speed sensor 7, the gyro sensor 8, and the GPS receiving device 9 are used to detect the current place (for example, an own vehicle position) in the in-vehicle device 100. The vehicle speed sensor 7 is a sensor that outputs a value used to calculate a vehicle speed. The gyro sensor 8 is configured from an optical fiber gyro, a vibration gyro, or the like, and detects an angular speed by rotation of the moving body. The GPS receiving device 9 measures the current place, a traveling speed, and a traveling direction of the moving body by receiving signals from GPS satellites, and measuring distances between the moving body and the GPS satellites and change rates of the distances, about three or more satellites.

The communication device 10 starts, continues, and terminates communication with an access control device that is communicative with the server device 200. The communication device 10 is connected with the access control device by any of various communication methods such as the wireless network including the Internet, the LAN, the WAN, and the Wi-Fi (registered trademark), and the short-distance wireless communication such as Bluetooth (registered trademark). Further, the communication device 10 attempts discover of or connection with the access control device periodically or at predetermined timing, and establishes the communication with the connectable access control device.

Referring back to the description of FIG. 1. The application management unit 111 included in the control unit 110 of the in-vehicle device 100 manages installation and uninstallation of application software executed in the in-vehicle device 100, and arrangement of software of update of a setting file and the like.

The application execution unit 112 controls startup and execution of the application software executed in the in-vehicle device 100, allocation, interruption, discontinuation, and termination of resources, and the like.

The information request unit 113 requests the information providing device 300 to provide information and receives the provided information, in response to a request from the application software operated in the application execution unit 112.

The information evaluation unit 114 evaluates the information provided from the information providing device 300 and stores the information to the output information storage unit 124. A plurality of pieces of the output object information may be stored in the output information storage unit 124, and thus after storing the information to the output information storage unit 124, the information evaluation unit 114 sorts the information in descending order of evaluation. That is, when there is a plurality of pieces of the object information to be output, the information evaluation unit 114 can also be said to determine which information is to be output according to the degree of evaluation, about the information to be passed to the output control unit 115.

The output control unit 115 determines content to be output and an object to be output in accordance with the output matrix, using the degree of urgency, the degree of evaluation, and the information of the work load, about the output object information stored in the output information storage unit 124, and performs an output.

The above-described functional units of the control unit 110 of the in-vehicle device 100, that is, the application management unit 111, the application execution unit 112, the information request unit 113, the information evaluation unit 114, and the output control unit 115 are built by read and execution of predetermined programs by the CPU 21. Therefore, the programs for realizing the processing of the functional units are stored in the RAM 22.

Note that the above-described configuration elements are configurations of the in-vehicle device 100 classified according to principal processing details, for easy understanding. Therefore, the invention of the present application is not limited by the way of classification of the configuration elements and names thereof. The configuration of the in-vehicle device 100 can be classified into a larger number of configuration elements according to the processing details. Further, one configuration element can be classified to execute a large number of types of processing.

Further, the functional units may be built by another hardware resource (an ASIC or a GPU), other than the CPU. Further, the processing of the functional units may be executed by a single hardware resource or a plurality of hardware resources.

The application information storage unit 221, the tag list storage unit 222, and the output matrix storage unit 223 of the server device 200 illustrated in FIG. 1 have similar data structures to the application information storage unit 121, the tag list storage unit 122, and the output matrix storage unit 123 of the in-vehicle device 100, respectively. Therefore, detailed description is omitted.

When the application providing unit 211 of the server device 200 receives the download request of the application software from the in-vehicle device 100, the application providing unit 211 reads a URI for using an application execution file or an application of the application software requested from the application information storage unit 221, and sends the URI to the in-vehicle device 100.

When the tag list providing unit 212 of the server device 200 receives the download request of the tag list from the in-vehicle device 100, the tag list providing unit 212 reads information from the tag list storage unit 222, and transmits the information to the in-vehicle device 100.

When the output matrix providing unit 213 of the server device 200 receives the download request of the output matrix from the in-vehicle device 100, the output matrix providing unit 213 reads information from the output matrix storage unit 223, and transmits the information to the in-vehicle device 100.

The information providing device 300 is a device that provides, upon receipt of a request from another device, predetermined information according to the request. When the information providing device 300 receives a request to a predetermined URI, the information providing device 300 generates information for drawing predetermined screen information in hypertext markup language 5 (HTML 5), like a so-called web server, and transmits the screen information to the request source.

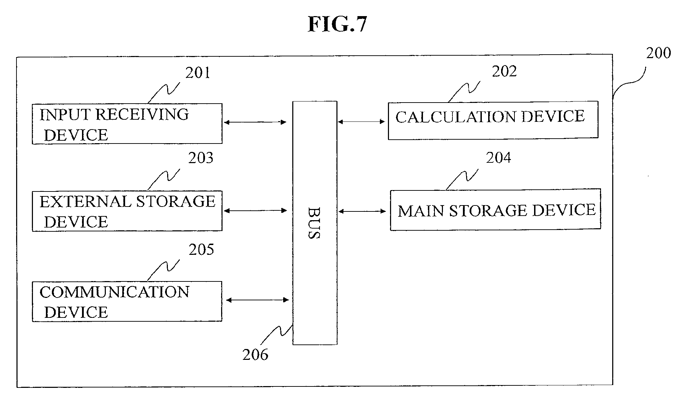

FIG. 7 is a diagram illustrating a hardware structure of the server device 200. The server device 200 includes an input receiving device 201, a calculation device 202, an external storage device 203, a main storage device 204, a communication device 205, and a bus 206 that connects the aforementioned devices.

The above-described functional units of the control unit 210, that is, the application providing unit 211, the tag list providing unit 212, and the output matrix providing unit 213 are built by read and execution of predetermined programs by the calculation device 202. Therefore, the programs for realizing the processing of the functional units are stored in the main storage device 204 or the external storage device 203.

Note that the above-described configuration elements are configurations of the server device 200 classified according to principal processing details, for easy understanding. Therefore, the invention of the present application is not limited by the way of classification of the configuration elements and its names. The configuration of the server device 200 can be classified into a larger number of configuration elements according to the processing details. Further, one configuration element can be classified to execute a larger number of types of processing.

Further, the functional units may be built by a hardware resource (an ASIC or a GPU), other than the CPU. Further, the processing of the functional units may be executed by a single hardware resource or may be executed by a plurality of hardware resources.

[Description of Operation]

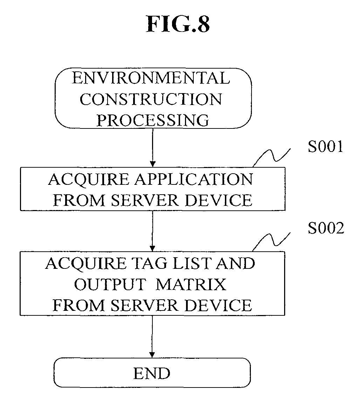

Next, an environmental construction processing performed by the in-vehicle device 100 will be described. FIG. 8 is a diagram illustrating a flow of the environmental construction processing. The environmental construction processing is started in response to an installation operation of the application software from the user or at predetermined timing.

First, the application management unit 111 acquires the application from the server device 200 (step S001). To be specific, the application management unit 111 of the in-vehicle device 100 receives the execution file or the URI of the application software provided by the application providing unit 211 of the server device 200 through the network 50, and executes processing necessary for execution of installation and the like.

The application management unit 111 then acquires the tag list and the output matrix from the server device 200 (step S002). To be specific, the application management unit 111 of the in-vehicle device 100 receives the tag list provided by the tag list providing unit 212 of the server device 200 and the output matrix provided by the output matrix providing unit 213 through the network 50, and stores the tag list and the output matrix to the tag list storage unit 122 and the output matrix storage unit 123 of the storage unit 120, respectively.

The above is the flow of the environmental construction processing. According to the environmental construction processing, the in-vehicle device 100 acquires the application software and the information for evaluating the information with the tag provided by the server device 200, and can construct an environment for execution.

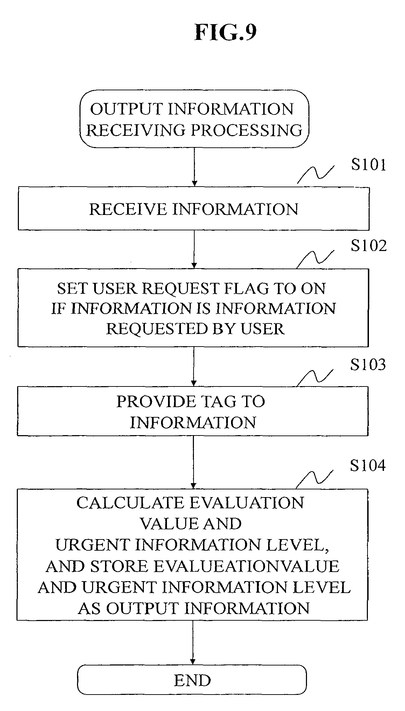

FIG. 9 is a diagram illustrating a flow of output information receiving processing.

First, the information evaluation unit 114 receives information (step S101). To be specific, the information evaluation unit 114 receives predetermined information from the information providing device 300. Note that this predetermined information may be information obtained as a result of a request performed in the in-vehicle device 100, or may be information obtained as a result generated by an event of some sort. For example, as an example of the former case, the predetermined information may be information such as a list of searched facilities and the like. As an example of the latter case, the predetermined information may be message information displayed due to excessive speed.

The information evaluation unit 114 then sets the user request flag to "ON" if the information is the information requested by the user (step S102). To be specific, the information evaluation unit 114 stores the received information in the output information storage unit 124 in association with the user request flag that is "ON" if the received information is the information requested by the user.

The information evaluation unit 114 then provides a tag to the information (step S103). To be specific, the information evaluation unit 114 searches for content of the information received in step S101, provides a tag corresponding to a predetermined keyword when the keyword is included, and stores the tag as the related tag 124B of the output information storage unit 124. For example, when a keyword "pasta" is included in certain information, the "pasta" is provided as the related tag of the information. Note that processing of providing a tag according to a keyword is not limited thereto, and the tag can be provided by application of various known technologies.

The information evaluation unit 114 then calculates the evaluation value and the urgent information level, and stores the evaluation value and the urgent information as the output information (step S104). To be specific, the information evaluation unit 114 calculates the evaluation value by reference to the related tag 124B, as described in the above formula (1). Further, the information evaluation unit 114 identifies the highest urgent information level, of appropriate urgent information, by reference to the tag 122G associated with the urgent information tag 122E, about the degree of urgency, and stores the identified urgent information level to the urgent information level 124E as the urgent information level of the information. Further, at the storage, the information evaluation unit 114 sorts the information including the information already stored in the output information storage unit 124 in descending order of the evaluation value and stores the information.

The above is the flow of the output information receiving processing. According to the output information receiving processing, the evaluation according to the content and the degree of urgency are quantized, and can be accumulated in descending order of the evaluation, about the information to be output.

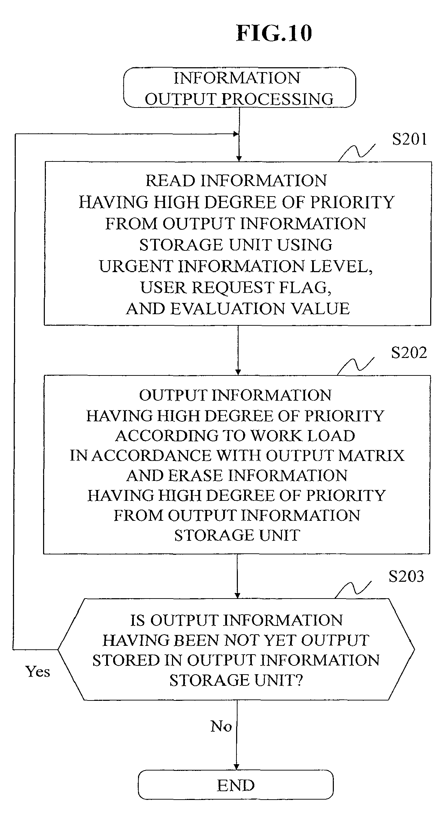

FIG. 10 is a diagram illustrating a flow of information output processing.

First, the output control unit 115 reads information having a high degree of priority from the output information storage unit 124 using the urgent information level, the user request flag, and the evaluation value (step S201). To be specific, the output control unit 115 reads prioritized information to be output, in accordance with a predetermined criteria, from the output information storage unit 124. For example, read of the information having the highest urgent information level is prioritized. When there is a plurality of pieces of information having the same urgent information level, the information with the user request flag "ON" is prioritized. As for the pieces of information having the same urgent information level and the same user request flag, the information is read in accordance with the criteria such as the information having a highest evaluation value being prioritized. However, an embodiment is not limited thereto, and the order may differ if a policy of an output differs. Alternatively, weights of some sorts are given, and the urgent information level, the user request flag, and the evaluation value are indexed and the degree of priority is calculated, and information having a high index may be prioritized.

The output control unit 115 then outputs the information having a high degree of priority according to the work load in accordance with the output matrix, and erases the information from the output information storage unit 124 (step S202). To be specific, the output control unit 115 outputs the prioritized information read in step S201. However, as the output form, the output control unit 115 employs an output form existing on an intersection of the state of the work load and the evaluation value on the matrix identified by the urgent information level and existence/non-existence of the user information flag, according to the information stored in the output matrix storage unit 123. As for the work load, it is desirable to acquire information of the work load at the time of the processing.

The output control unit 115 then determines whether the output information that has not yet been output is stored in the output information storage unit 124 (step S203). If the output information that has not yet been output is stored (Yes in step S203), the output control unit 115 puts the control back to step S201. If not, the output control unit 115 terminates the information output processing.

The above is the flow of the information output processing. According to the information output processing, the prioritized information can be read piece by piece, and the output can be appropriately performed according to the state of the work load. For example, when the same information is output, the information can be appropriately output in different forms between during driving at an intersection and a state of being parked in a parking lot.

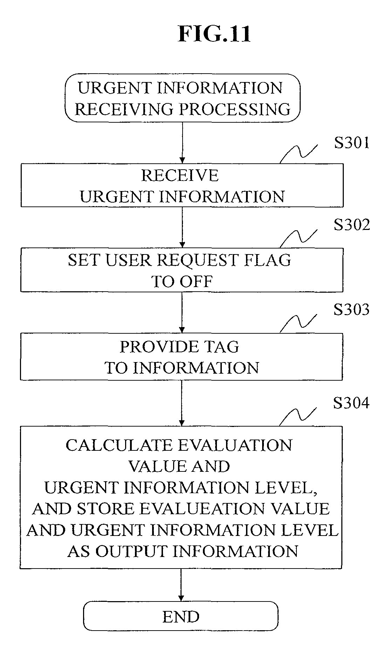

FIG. 11 is a diagram illustrating a flow of urgent information receiving processing. The urgent information receiving processing is started when the in-vehicle device 100 receives the urgent information, for example, when the in-vehicle device 100 receives an alarm from a public organization or the like due to occurrence of an earthquake.

First, the information evaluation unit 114 receives the urgent information (step S301). To be specific, the information evaluation unit 114 receives predetermined information from the information providing device 300 that provides the urgent information.

The information evaluation unit 114 then sets the user request flag to "OFF" (step S302). To be specific, the information evaluation unit 114 stores the received urgent information in association with the user request flag as "OFF" to the output information storage unit 124.

The information evaluation unit 114 then provides a tag to the information (step 303). To be specific, the information evaluation unit 114 searches for content of the urgent information received in step S301, provides a tag corresponding to a predetermined keyword if the keyword is included, and stores the tag as the related tag 124B of the output information storage unit 124. For example, when certain urgent information includes the keyword of "emergency earthquake warning", the information is provided with the "emergency earthquake warning" as the related tag. Note that the processing of providing a tag according to a keyword is not limited thereto, and the tag can be provided by application of various known technologies.

The information evaluation unit 114 then calculates the evaluation value and the urgent information level, and stores the evaluation value and the urgent information as the output information (step S304). To be specific, the information evaluation unit 114 calculates the evaluation value by reference to the related tag 124B, as described in the above formula (1). Further, the information evaluation unit 114 then identifies the highest urgent information level, of the appropriate urgent information, by reference to the tag 122G associated with the urgent information tag 122E, about the degree of urgency, and stores the identified highest urgent information level to the urgent information level 124E as the urgent information level of the information. Further, at the time of storage, the information evaluation unit 114 sorts the information including the information already stored in the output information storage unit 124 in descending order of the evaluation value and stores the information.

The above is the flow of the urgent information receiving processing. According to the urgent information receiving processing, the evaluation according to the content and the degree of urgency are quantized about the urgent information to be output, and can be accumulated in descending order of the evaluation, about the urgent information to be output.

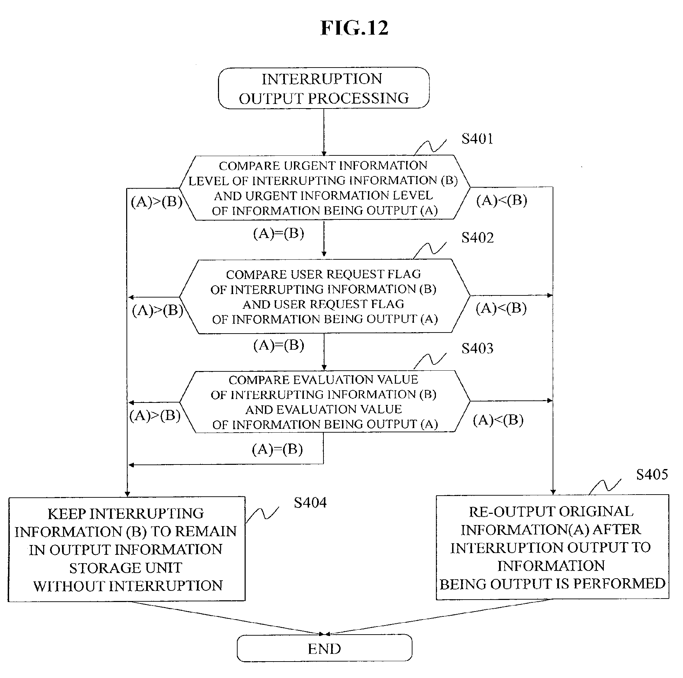

FIG. 12 is a diagram illustrating a flow of interruption output processing. The interruption output processing is started when the output information is newly received when there is information being output in the information output processing.

First, the output control unit 115 compares the urgent information level of interrupting information (called "(B)") and the urgent information level of information being output (called "(A)") (step S401).

As a result of the comparison, when the urgent information level of the information (A) is larger than the urgent information level of the information (B) ((A) > (B) in step S401), the output control unit 115 does not allow interruption, and keeps the interrupting information (B) to remain in the output information storage unit 124 (step S404). The output control unit 115 then terminates the interruption output processing.

As a result of the comparison, when the urgent information level of the information (A) is smaller than the urgent information level of the information (B) ((A) < (B) in step S401), the output control unit 115 performs an interruption output to the information being output, and then re-outputs the original information (A) (step S405. The output control unit 115 then terminates the interruption output processing.

As a result of the comparison, when the urgent information level of the information (A) is the same as the urgent information level of the information (B) ((A) = (B) in step S401), the output control unit 115 compares the user request flag of the interrupting information (B) and the user request flag of the information (A) being output (step S402). Note that, in this processing, the user request flags "ON" and "OFF" are respectively rewritten to numerical values "1" and "0", and calculation is performed.

As a result of the comparison, when the user request flag of the information (A) is larger than the user request flag of the information (B) ((A) > (B) in step S402), the output control unit 115 advances the control to step S404. The output control unit 115 then terminates the interruption output processing.

As a result of the comparison, when the user request flag of the information (A) is smaller than the user request flag of the information (B) ((A) < (B) in step S402), the output control unit 115 advances the control to step S405. The output control unit 115 then terminates the interruption output processing.

As a result of the comparison, when the user request flag of the information (A) is the same as the user request flag of the information (B) ((A) = (B) in step S402), the output control unit 115 compares the evaluation value of the interrupting information (B) and the evaluation value of the information (A) being output (step S403).

As a result of the comparison, when the evaluation value of the information (A) is larger than or the same as the evaluation value of the information (B) ((A) > (B) or (A) = (B) in step S403), the output control unit 115 advances the control to step S404. The output control unit 115 then terminates the interruption output processing.

As a result of the comparison, when the evaluation value of the information (A) is smaller than the evaluation value of the information (B) ((A) < (B) in step S403), the output control unit 115 advances the control to step S405. The output control unit 115 then terminates the interruption output processing.

The above is the flow of the interruption output processing. According to the interruption output processing, when the information output in priority to the information being output is received, the output of the information being output is stopped, and the prioritized information interrupts the stopped information, and the stopped information can be re-output afterward. Therefore, display of the prioritized information to be displayed is not impeded, and can be appropriately output.

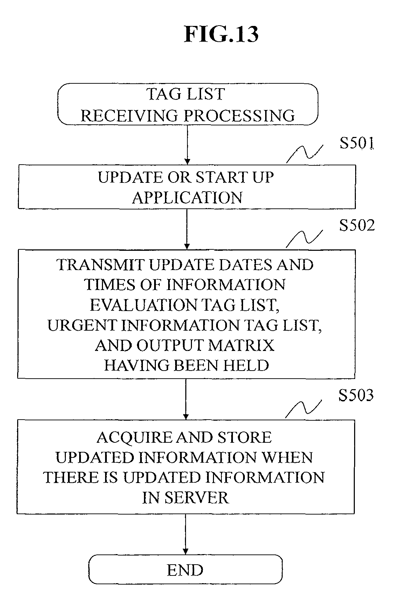

FIG. 13 is a diagram illustrating a flow of tag list receiving processing. The tag list receiving processing is started when the in-vehicle device 100 is started up.

First, the application management unit 111 detects that the predetermined application software is started up by the application execution unit 112, or the predetermined application software is updated by the application management unit 111 (step S501).

The application management unit 111 then acquires respective update dates and times of the information evaluation tag list, the urgent information tag list, and the output matrix that have already been held, and transmits the update dates and times to the server device 200 (step S502).

Then, in the server device 200, whether updated information exists about the information evaluation tag list, the urgent information tag list, and the output matrix is determined. As a result, when the updated information exists in the server device 200, the application management unit 111 acquires and stores the updated information (step S503).

The above is the flow of the tag list receiving processing. According to the tag list receiving processing, when the tag list and the matrix are updated, update becomes available upon update of the application or startup of the application as a trigger.

The above is the information system according to the first embodiment. According to the first embodiment, the output can be more appropriately performed according to content of information.

Note that the present invention is not limited to the above embodiment. Various modifications can be made in the first embodiment within the technical idea of the present invention.

For example, in the first embodiment, the application is operated in the in-vehicle device 100, and the output is controlled when the output is performed. However, an embodiment is not limited thereto. For example, an application may be operated in a smart phone communicatively connected to the in-vehicle device 100, and an output may be controlled when the output is performed.

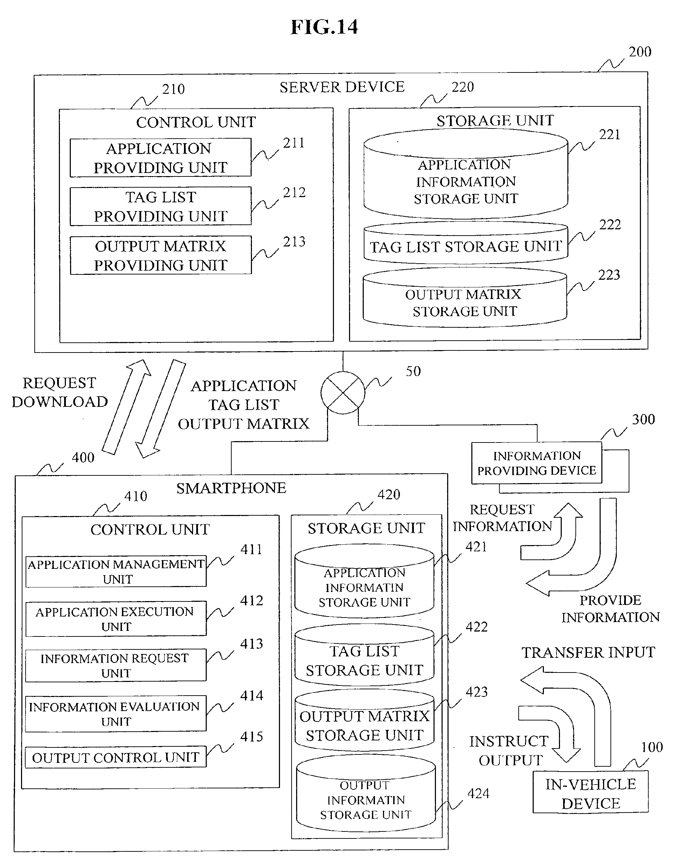

For example, as illustrated in FIG. 14, the control unit 110 and the storage unit 120 included in the in-vehicle device 100 in the first embodiment may be realized by a control unit 410 and a storage unit 420 of a smart phone 400.

In this case, an application management unit 411, an application execution unit 412, an information request unit 413, an information evaluation unit 414, and an output control unit 415 respectively corresponding to the application management unit 111, the application execution unit 112, the information request unit 113, the information evaluation unit 114, and the output control unit 115 included in the control unit 110 are included in the control unit 410 of the smart phone 400. Further, an application information storage unit 421, a tag list storage unit 422, an output matrix storage unit 423, and an output information storage unit 424 respectively corresponding to the application information storage unit 121, the tag list storage unit 122, the output matrix storage unit 123, and the output information storage unit 124 included in the storage unit 120 are included in the storage unit 420 of the smart phone 400.

Further, the in-vehicle device 100 passes the input information to the smart phone 400 upon receipt of an input to the smart phone 400, and performs an output upon receipt of an output instruction from the smart phone 400. That is, the in-vehicle device 100 plays a role of a user interface of the smart phone 400.

In such a modification, further, for example, specification of a device of an output destination is made available in an output matrix, so that the output control unit 415 can differentiate output content and respectively instruct the outputs to the in-vehicle device 100 and the smart phone 400. To be specific, information having the degree of urgency that is a predetermined degree or higher may be output to the in-vehicle device 100, and information having the degree of urgency that is lower than the predetermined degree may be accumulated in the smart phone 400 and content may be able to be confirmed at arbitrary timing afterward. In doing so, non-urgent information can be confirmed by the driver in a relaxed way after driving.

Further, by outputting the output information related to privacy information only to the smart phone 400 when there is a plurality of passengers, the privacy information of the passengers can be prevented from being notified to the passengers. As for this method, an existing known method can be employed, such as a method for identifying the number of persons using a seating sensor or an in-vehicle camera for grasping the number of passengers, or a method for identifying the number of persons by wireless communication connection with a device close to an owner of the smart phone. The output control unit 415 changes the degree of evaluating the keyword according to whether the number of passengers to the vehicle is a predetermined number or more, and outputs the output information.

Further, in the first embodiment, the output control being performed about the information provided from the information providing device 300 outside the in-vehicle device 100 has been described. However, an embodiment is not limited thereto, and output control may be performed about output information from the in-vehicle device 100 itself. For example, in a case of outputting abnormality of a vehicle, interruption output can be performed as urgent information.

As described above, the present invention has been described using the embodiments. However, the embodiments are not limited thereto, and the characteristic processing described in the embodiments can be applied to other devices (for example, the characteristic processing can be applied not only to the in-vehicle device 100, but also to mobile terminals such as attachable/detachable navigation devices).

**Claims**

1. An in-vehicle device comprising:

   a storage unit configured to store keyword information in which a keyword and the degree of evaluating the keyword are associated, and output determination information in which the degree of evaluating the keyword and an output method according to the degree of evaluating the keyword are associated;
   an information evaluation unit configured to evaluate object information to be output using the keyword information; and
   an output control unit configured to output the object information to be output by the output method identified using the output determination information according to the degree of the evaluation performed by the information evaluation unit.

2. The in-vehicle device according to claim 1, comprising:

a control unit configured to inquire of an external device existence or non-existence of updated information about one or both of the keyword information and the output determination information when a predetermined condition about one or both of the keyword information and the output determination information is satisfied, and acquire the updated information if there is.

3. The in-vehicle device according to claim 1, wherein
the information evaluation unit determines which information is to be output according to the degree of evaluating information to be passed to the output control unit, when there is a plurality of pieces of the object information to be output.

4. The in-vehicle device according to claim 1, wherein
urgent information in which the keyword and the degree of urgency related to the keyword are associated is stored in the storage unit,
the information evaluation unit identifies the degree of urgency using the urgent information about the object information to be output, and
the output information having a higher degree of urgency is output to the output control unit in priority to other information.

5. The in-vehicle device according to claim 4, wherein
the information evaluation unit causes the output information having a higher degree of urgency to interrupt and the output control unit to output the output information having a higher degree of urgency, in a state where information having a lower degree of urgency than the output information having a higher degree of urgency is being output.

6. The in-vehicle device according to claim 1, wherein
the output control unit changes the degree of evaluating the keyword and outputs the object information to be output, according to whether the number of passengers to a vehicle is a predetermined number or more.

7. The in-vehicle device according to claim 1, wherein
the output control unit identifies the output method using a load of a driver identified by the in-vehicle device, in processing of identifying the output method.

8. An information system including an in-vehicle device and a terminal connected to the in-vehicle device and communicating input/output information, wherein
the terminal includes
a storage unit configured to store keyword information in which a keyword and the degree of evaluating the keyword are associated, and output determination information in which the degree of evaluating the keyword and an output method according to the degree of evaluating the keyword are associated,
an information evaluation unit configured to evaluate object information to be output using the keyword information, and
an output control unit configured to output the object information to be output to the connected in-vehicle device by the output method identified using the output determination information according to the degree of the evaluation performed by the information evaluation unit,
and
the in-vehicle device outputs the object information to be output based on an output from the output control unit.

9. The information system according to claim 8, wherein
the output control unit identifies the output method using a load of a driver identified by the in-vehicle device, in processing of identifying the output method.

10. The information system according to claim 8, wherein
the output control unit causes the in-vehicle device to output information having the degree of the evaluation being a predetermined degree or more.

11. The information system according to claim 8, wherein

the output control unit causes the terminal to output information having the degree of the evaluation being less than a predetermined degree.

12. An output control method of an in-vehicle device,
the in-vehicle device including
a storage unit configured to store keyword information in which a keyword and the degree of evaluating the keyword are associated, and output determination information in which the degree of evaluating the keyword and an output method according to the degree of evaluating the keyword are associated, and a control unit, and
the control unit including
an information evaluation step of evaluating object information to be output using the keyword information, and
an output control step of outputting the object information to be output by the output method identified using the output determination information according to the degree of the evaluation performed in the information evaluation step.

# FIG.1

200

SERVER DEVICE

210

### CONTROL UNIT

| APPLICATION PROVIDING UNIT | 211 |
| TAG LIST PROVIDING UNIT | 212 |
| OUTPUT MATRIX PROVIDING UNIT | 213 |

220

### STORAGE UNIT

APPLICATION INFORMATION STORAGE UNIT — 221

TAG LIST STORAGE UNIT — 222

OUTPUT MATRIX STORAGE UNIT — 223

REQUEST DOWNLOAD

APPLICATION
TAG LIST
OUTPUT MATRIX

50

100

110  IN-VEHICLE DEVICE    120

### CONTROL UNIT

| APPLICATION MANAGEMENT UNIT | 111 |
| APPLICATION EXECUTION UNIT | 112 |
| INFORMATION REQUEST UNIT | 113 |
| INFORMATION EVALUATION UNIT | 114 |
| OUTPUT CONTROL UNIT | 115 |

### STORAGE UNIT

APPLICATION INFORMATIN STORAGE UNIT — 121

TAG LIST STORAGE UNIT — 122

OUTPUT MATRIX STORAGE UNIT — 123

OUTPUT INFORMATIN STORAGE UNIT — 124

300

INFORMATION PROVIDING DEVICE

REQUEST INFORMATION

PROVIDE INFORMATION

13

# FIG.2

<u>100</u>

# FIG.3

APPLICATION INFORMATION STORAGE UNIT 121

| APPLICATION IDENTIFIER | APPLICATION EXECUTION FILE | OPERABLE MODEL | UPDATE DATE |
|---|---|---|---|
| 121A | 121B | 121C | 121D |
|  |  |  |  |

# FIG.4

TAG LIST STORAGE UNIT 122

122A

INFORMATION
EVALUATION
TAG

| CATEGORY | TAG | COEFFICIE NT |
|---|---|---|
| TIME ZONE | EARLY MORNING, MORNING, AFTERNOON, EVENING, NIGHT, MIDNIGHT | 20 |
| PLACE | NEAR CURRENT PLACE, NEAR HOME, NEAR DESTINATION, NEAR ROUTE | 30 |
| TREND | ELECTION, FOOTBALL, POLITICS, FIGURE SKATING, CHRISTMAS | 40 |
| INDIVIDUAL PREFERENCE | GOURMET, SPORTS, ENTERTAINMENT | 50 |
| ... | ... | ... |

122B         122C         122D

122E

URGENT
INFORMATION
TAG

| CATEGORY | TAG | URGENT INFORMATION LEVEL |
|---|---|---|
| URGENCY | UEGENCY, EARTHQUAKE | 3 |
| WARNING | WARING, EXCESSIVE SPEED, BREAKDOWN | 2 |
| ATTENTION | ATTENTION, SAFETY DRIVING, SIGNAL, TEMPORARY STOP, CLOSURE, LANE CLOSURE | 1 |

122F         122G         122H

# FIG.5

OUTPUT MATRIX STORAGE UNIT 123

123A — URGENT INFORMATION LEVEL 0

123B — USER REQUEST FLAG EXISTENCE

123D

|  | EVALUATION VALUE 29 OR LESS | EVALUATION VALUE 30-59 | EVALUATION VALUE 60-99 | EVALUATION VALUE 100 OR MORE |
|---|---|---|---|---|
| WORK LOAD HIGH | HOLD | HOLD | HOLD | HOLD |
| WORK LOAD MIDDLE | VOICE | VOICE | VOICE | VOICE |
| WORK LOAD LOW | DISPLAY VOICE | DISPLAY VOICE | DISPLAY VOICE | DISPLAY VOICE |

123F — URGENT INFORMATION LEVEL 3

123C — USER REQUEST FLAG NON-EXISTENCE

123E

|  | EVALUATION VALUE 29 OR LESS | EVALUATION VALUE 30-59 | EVALUATION VALUE 60-99 | EVALUATION VALUE 100 OR MORE |
|---|---|---|---|---|
| WORK LOAD HIGH | NONE | HOLD | HOLD | HOLD |
| WORK LOAD MIDDLE | NONE | HOLD | HOLD | VOICE |
| WORK LOAD LOW | NONE | VOICE | VOICE | DISPLAY VOICE |

# FIG.6

OUTPUT INFORMATION STORAGE UNIT 124

| 124A | 124B | 124C | 124D | 124E |
|---|---|---|---|---|
| INFORMATION NAME | RELATED TAG | EVALUATION VALUE | USER REQUEST FLAG | URGENT INFORMATION LEVEL |
| NEWS(FOOTBALL) | FOOTBALL, SPORTS, OSAKA, URAWA | 90 | 0 | 0 |
| WEATHER | WEATHER, EVENING, NIGHT, HEAVY SNOW, NEAR DESTINATION | 70 | 0 | 0 |
| GOURMET SEARCH | GOURMET, RAMEN, PASTA, SUSHI | 50 | 1 | 0 |
| STOP-OFF POINT | REST, NEAR ROUTE | 30 | 0 | 0 |
| ALERT(EXCESSIVE SPEED) | EXCESSIVE SPEED | 0 | 0 | 2 |
| . . . | . . . | . . . | . . . | . . . |

# FIG.7

```
                                                                    200

    ┌─ 201                        ┌─ 202
    INPUT RECEIVING    ◄──►   ┌───┐   ◄──►   CALCULATION DEVICE
    DEVICE                    │   │
                             │   │
    ┌─ 203                    │ B │     ┌─ 204
    EXTERNAL STORAGE  ◄──►    │ U │  ◄──►   MAIN STORAGE DEVICE
    DEVICE                    │ S │
                             │   │
    ┌─ 205                    │   │
    COMMUNICATION     ◄──►    │   │
    DEVICE                    └───┘
                          206
```

# FIG.8

```
┌─────────────────────┐
│   ENVIRONMENTAL     │
│   CONSTRUCTION      │
│    PROCESSING       │
└─────────────────────┘
           │
           ▼                    S001
┌─────────────────────┐
│  ACQUIRE APPLICATION │
│  FROM SERVER DEVICE  │
└─────────────────────┘
           │
           ▼                    S002
┌─────────────────────┐
│  ACQUIRE TAG LIST AND│
│   OUTPUT  MATRIX    │
│  FROM SERVER DEVICE  │
└─────────────────────┘
           │
           ▼
┌─────────────────────┐
│         END         │
└─────────────────────┘
```

# FIG.9

```
┌─────────────────────────────┐
│   OUTPUT INFORMATION         │
│  RECEIVING PROCESSING        │
└─────────────────────────────┘
              │
              │              S101
              ▼
┌─────────────────────────────┐
│     RECEIVE INFORMATION      │
└─────────────────────────────┘
              │
              │              S102
              ▼
┌─────────────────────────────┐
│   SET USER REQUEST FLAG TO ON│
│  IF INFORMATION IS INFORMATION│
│      REQUESTED BY USER       │
└─────────────────────────────┘
              │
              │              S103
              ▼
┌─────────────────────────────┐
│      PROVIDE TAG TO          │
│       INFORMATION            │
└─────────────────────────────┘
              │
              │              S104
              ▼
┌─────────────────────────────┐
│    CALCULATE EVALUATION      │
│        VALUE AND             │
│  URGENT INFORMATION LEVEL,   │
│  AND STORE EVALUEATIONVALUE  │
│  AND URGENT INFORMATION LEVEL│
│      AS OUTPUT INFORMATION   │
└─────────────────────────────┘
              │
              ▼
┌─────────────────────────────┐
│            END               │
└─────────────────────────────┘
```

# FIG.10

INFORMATION
OUTPUT PROCESSING

S201

READ INFORMATION
HAVING HIGH DEGREE OF PRIORITY
FROM OUTPUT INFORMATION
STORAGE UNIT USING
URGENT INFORMATION LEVEL,
USER REQUEST FLAG,
AND EVALUATION VALUE

S202

OUTPUT INFORMATION
HAVING HIGH DEGREE OF PRIORITY
ACCORDING TO WORK LOAD
IN ACCORDANCE WITH OUTPUT MATRIX
AND ERASE INFORMATION
HAVING HIGH DEGREE OF PRIORITY
FROM OUTPUT INFORMATION
STORAGE UNIT

S203

IS OUTPUT INFORMATION
HAVING BEEN NOT YET OUTPUT
STORED IN OUTPUT INFORMATION
STORAGE UNIT?

Yes

No

END

# FIG.11

URGENT INFORMATION
RECEIVING PROCESSING

S301

RECEIVE
URGENT INFORMATION

S302

SET USER REQUEST FLAG
TO OFF

S303

PROVIDE TAG
TO INFORMATION

S304

CALCULATE EVALUATION
VALUE AND
URGENT INFORMATION LEVEL,
AND STORE EVALUEATION VALUE
AND URGENT INFORMATION LEVEL
AS OUTPUT INFORMATION

END

# FIG.12

INTERRUPTION
OUTPUT PROCESSING

S401

COMPARE URGENT INFORMATION
LEVEL OF INTERRUPTING INFORMATION (B)
AND URGENT INFORMATION LEVEL
OF INFORMATION BEING OUTPUT (A)

(A)>(B)

(A)<(B)

(A)=(B)

S402

COMPARE USER REQUEST FLAG
OF INTERRUPTING INFORMATION (B)
AND USER REQUEST FLAG
OF INFORMATION BEING OUTPUT (A)

(A)>(B)

(A)<(B)

(A)=(B)

S403

COMPARE EVALUATION VALUE
OF INTERRUPTING INFORMATION (B)
AND EVALUATION VALUE
OF INFORMATION BEING OUTPUT (A)

(A)>(B)

(A)<(B)

(A)=(B)

S405

S404

KEEP INTERRUPTING
INFORMATION (B) TO REMAIN
IN OUTPUT INFORMATION
STORAGE UNIT
WITHOUT INTERRUPTION

RE-OUTPUT ORIGINAL
INFORMATION(A) AFTER
INTERRUPTION OUTPUT TO
INFORMATION
BEING OUTPUT IS PERFORMED

END

# FIG.13

```
      ╭─────────────────────────╮
      │       TAG LIST          │
      │  RECEIVING PROCESSING   │
      ╰─────────────────────────╯
                  │
                  ▼              ∿ S501
      ┌─────────────────────────┐
      │    UPDATE OR START UP   │
      │       APPLICATION       │
      └─────────────────────────┘
                  │
                  ▼              ∿ S502
      ┌─────────────────────────┐
      │  TRANSMIT UPDATE DATES  │
      │  AND TIMES OF INFORMATION│
      │    EVALUATION TAG LIST, │
      │ URGENT INFORMATION TAG  │
      │   LIST, AND OUTPUT      │
      │   MATRIX HAVING BEEN HELD│
      └─────────────────────────┘
                  │
                  ▼              ∿ S503
      ┌─────────────────────────┐
      │    ACQUIRE AND STORE    │
      │  UPDATED INFORMATION    │
      │    WHEN THERE IS        │
      │  UPDATED INFORMATION    │
      │      IN SERVER          │
      └─────────────────────────┘
                  │
                  ▼
      ╭─────────────────────────╮
      │          END            │
      ╰─────────────────────────╯
```

# FIG.14

200

SERVER DEVICE

210

## CONTROL UNIT

| APPLICATION PROVIDING UNIT | 211 |
| TAG LIST PROVIDING UNIT | 212 |
| OUTPUT MATRIX PROVIDING UNIT | 213 |

220

## STORAGE UNIT

| APPLICATION INFORMATION STORAGE UNIT | 221 |
| TAG LIST STORAGE UNIT | 222 |
| OUTPUT MATRIX STORAGE UNIT | 223 |

REQUEST DOWNLOAD

APPLICATION TAG LIST OUTPUT MATRIX

50

400

SMARTPHONE

410

## CONTROL UNIT

| APPLICATION MANAGEMENT UNIT | 411 |
| APPLICATION EXECUTION UNIT | 412 |
| INFORMATION REQUEST UNIT | 413 |
| INFORMATION EVALUATION UNIT | 414 |
| OUTPUT CONTROL UNIT | 415 |

420

## STORAGE UNIT

| APPLICATION INFORMATIN STORAGE UNIT | 421 |
| TAG LIST STORAGE UNIT | 422 |
| OUTPUT MATRIX STORAGE UNIT | 423 |
| OUTPUT INFORMATIN STORAGE UNIT | 424 |

300

INFORMATION PROVIDING DEVICE

REQUEST INFORMATION

PROVIDE INFORMATION

TRANSFER INPUT

INSTRUCT OUTPUT

100

IN-VEHICLE DEVICE

**EP 3 115 749 A1**

Europäisches
Patentamt

European
Patent Office

Office européen
des brevets

# EUROPEAN SEARCH REPORT

Application Number

EP 16 00 1517

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2013/038437 A1 (TALATI ROHIT [US] ET AL) 14 February 2013 (2013-02-14) * paragraphs [0018] - [0020], [0027] - [0028], [0033], [0034], [0041] - [0043], [0056] - [0058] * ----- | 1-12 | INV. G01C21/36 |
| X | PHILIPP FISCHER ET AL: "Adaptive personalization of multimodal vehicular interfaces using a hybrid recommendation approach with fuzzy preferences", INTELLIGENT VEHICLES SYMPOSIUM, 2008 IEEE, IEEE, PISCATAWAY, NJ, USA, 4 June 2008 (2008-06-04), pages 209-213, XP031318967, ISBN: 978-1-4244-2568-6 * page 209, left-hand column, paragraph 1 - page 210, left-hand column, paragraph 1 * * page 210, right-hand column, paragraph 3 - page 211, right-hand column, paragraph 4 * ----- | 1-12 | |

TECHNICAL FIELDS SEARCHED (IPC)

G01C

The present search report has been drawn up for all claims

| Place of search | Date of completion of the search | Examiner |
|---|---|---|
| Munich | 24 November 2016 | Zubrzycki, Wojciech |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 16 00 1517

This annex lists the patent family members relating to the patent documents cited in the above-mentioned European search report.
The members are as contained in the European Patent Office EDP file on
The European Patent Office is in no way liable for these particulars which are merely given for the purpose of information.

24-11-2016

| Patent document cited in search report | Publication date | Patent family member(s) | Publication date |
|---|---|---|---|
| US 2013038437 A1 | 14-02-2013 | NONE | |

EPO FORM P0459

For more details about this annex : see Official Journal of the European Patent Office, No. 12/82

**EP 3 115 749 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013015968 A